# EUROPEAN PATENT APPLICATION

(11) **EP 2 149 834 A2**
(43) Date of publication of application: **03.02.2010**
(21) Application number: 09009625.6
(22) Date of filing: 24.07.2009
(51) Int. Cl.: G06F 1/32

(54) **Portable electronics and sensing method**

(30) Priority: 25.07.2008 JP 2008192530
(71) Applicant: Kabushiki Kaisha Toshiba, Minato-ku, Tokyo 105-8001 (JP)
(72) Inventor: Nagai, Takeshi, Tokyo 105-8001 (JP)
(74) Representative: HOFFMANN EITLE

(57) **Abstract**

A portable electronics includes detection unit (20) which detects a state of the portable electronics, storage unit (20) which stores a detection result of the detection unit at a first period, and determination unit (20) which reads out, every time a second period longer than the first period has elapsed, a plurality of detection results stored in the storage unit during the second period and determines the state of the portable electronics based on the plurality of readout detection results.

## Description

The present invention relates to a sensing method used in, e.g., a portable electronics.

As is well known, an important challenge for portable electronics such as a cellular phone is to reduce power consumption. Conventionally, power consumption is reduced by detecting user's approach or contact and controlling the operating state in accordance with the user's approach, contact, or leaving (e.g., Jpn. Pat. Appln. KOKAI Publication No. 6-119090).

In such a conventional method, however, a sensor needs to always operate to detect user's approach or contact. This sensing consumes additional power.

That is, in the conventional portable electronics, the power consumption of sensing poses a problem and is demanded to be lower.

The present invention has been made in order to meet the above demand, and is intended to provide portable electronics capable of reducing power consumption required for sensing.

To achieve this object, the present invention is a portable electronics comprising: a detection unit which detects a state of the portable electronics; a storage unit which stores a detection result of the detection unit at a first period; and a determination unit which reads out, every time a second period longer than the first period has elapsed, a plurality of detection results stored in the storage unit during the second period and determines the state of the portable electronics based on the plurality of readout detection results.

In the present invention, the storage unit stores the detection result of the detection unit at the first period. A plurality of detection results stored in the storage unit during the second period longer than the first period are read out every time the second period has elapsed, and the state of the portable electronics is determined.

The invention can be more fully understood from the following detailed description when taken in conjunction with the accompanying drawings, in which:
FIG. 1 is a block diagram showing the arrangement of a mobile wireless terminal apparatus using a sensing method according to the present invention;
FIG. 2 is a block diagram showing the arrangement of a sensor unit of the mobile wireless terminal apparatus shown in FIG. 1 according to the first embodiment;
FIG. 3 is a timing chart for explaining the operation of the sensor unit shown in FIG. 2;
FIG. 4 is a block diagram showing the arrangement of a sensor unit of the mobile wireless terminal apparatus shown in FIG. 1 according to the second embodiment;
FIG. 5 is a timing chart for explaining the operation of the sensor unit shown in FIG. 4;
FIG. 6 is a timing chart for explaining the operation of the sensor unit shown in FIG. 4;
FIG. 7 is a block diagram showing the arrangement of a sensor unit of the mobile wireless terminal apparatus shown in FIG. 1 according to the third embodiment; and
FIG. 8 is a timing chart for explaining the operation of the sensor unit shown in FIG. 7.

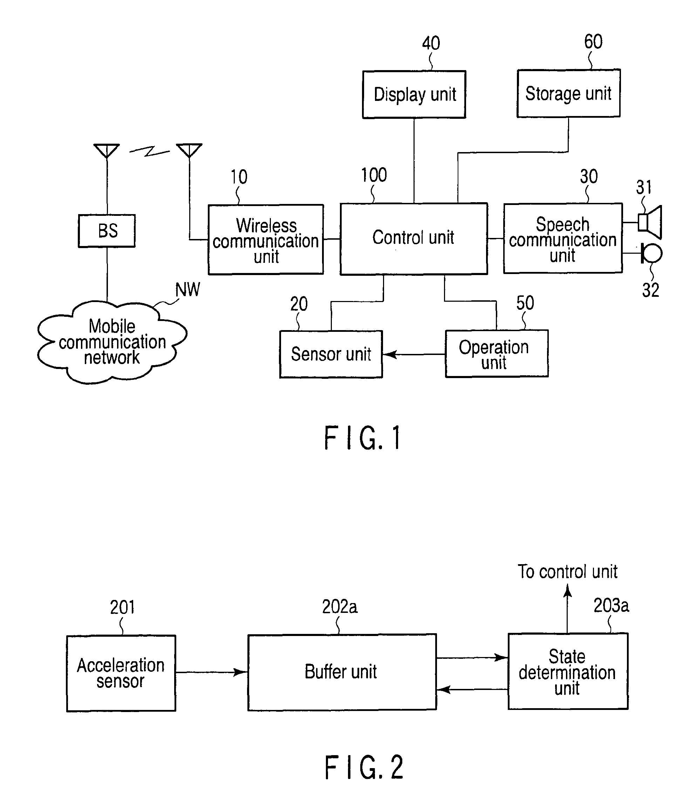

An embodiment of the present invention will now be described with reference to the accompanying drawing. A mobile wireless terminal apparatus such as a cellular phone will be explained below as an example of a portable electronics. FIG. 1 is a block diagram showing the arrangement of a mobile wireless terminal apparatus according to the embodiment of the present invention. The mobile wireless terminal apparatus includes, as main constituent elements, a control unit 100, a wireless communication unit 10, a sensor unit 20, a speech communication unit 30, a display unit 40, an operation unit 50, and a storage unit 60, as shown in FIG. 1.

The wireless communication unit 10 complies with a wireless communication standard used in a mobile communication system such as W-CDMA (Wideband Code Division Multiple Access). The wireless communication unit 10 wirelessly communicates with a base station apparatus BS accommodated in a mobile communication network NW in accordance with instructions from the control unit 100 so as to transmit/receive voice data or email data or receive Web data or streaming data. That is, the mobile communication network NW and the base station apparatus BS accommodated in it form part of a cellular phone system.

The sensor unit 20 detects the state of the mobile wireless terminal apparatus. In accordance with the detection result, the control unit 100 transits from a sleep state to an active state. Note that the mobile wireless terminal apparatus can take, e.g., a standstill state when placed on a desk or the like, a held state when picked up from the desk by a user, and a carried state when carried by a user (e.g., moving on foot, moving by bicycle, moving by car, moving by train, or moving by airplane).

The speech communication unit 30 is connected to a loudspeaker 31 and a microphone 32. The speech communication unit 30 converts user's voice input via the microphone 32 into voice data and outputs it to the control unit 100. Alternatively, the speech communication unit 30 decodes voice data received from a communication partner and outputs it via the loudspeaker 31.

The display unit 40 displays an image (still or moving image) or text information to visually transfer information to the user under the control of the control unit 100.

The operation unit 50 includes a plurality of key switches and receives user instructions via them.

The storage unit 60 stores, e.g., the control program and control data of the control unit 100, application software, address data which associates the names, telephone numbers, and the like of communication partners with each other, data of sent and received email, Web data downloaded by Web browsing, and downloaded streaming data.

The control unit 100 includes a microprocessor. The control unit 100 operates in accordance with the control program and control data stored in the storage unit 60 to comprehensively control the units of the mobile wireless terminal apparatus and implement voice communication or data communication. The control unit 100 also has a communication control function of performing email transmission/reception, Web browsing, moving image display on the display unit 40 based on downloaded streaming data, and voice communication by operating in accordance with application software stored in the storage unit 60.

Without user operations from the operation unit 50, mail reception, or incoming call for a predetermined time or more, the control unit 100 transits from an active state that is a normal operating state to a sleep state in which the apparatus stops several functions, thereby suppressing power consumption. Upon receiving a request from the sensor unit 20 in the sleep state, the control unit 100 transits to the active state again.

The control unit 100 executes various kinds of control based on information representing the state of the mobile wireless terminal apparatus sent from the sensor unit 20.

### (First Embodiment)

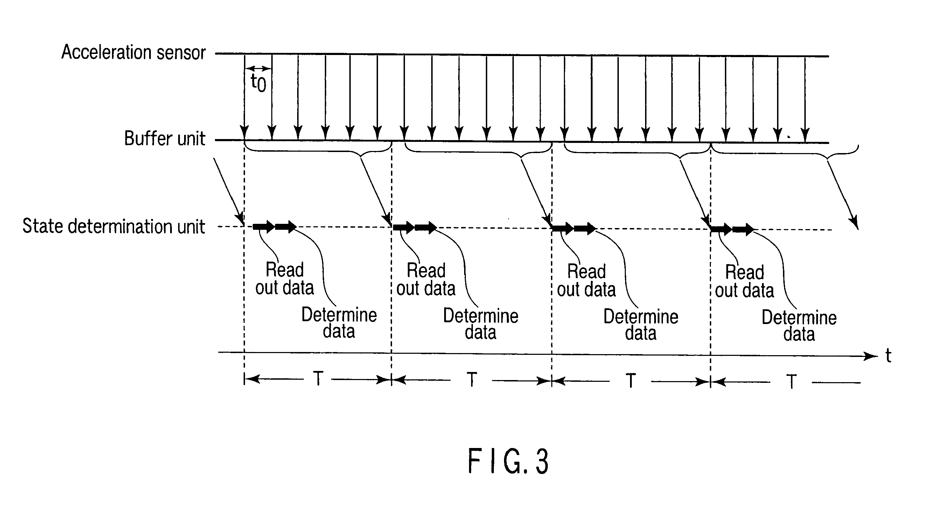

FIG. 2 shows the arrangement of a sensor unit 20 according to the first embodiment of the present invention. The sensor unit 20 includes an acceleration sensor 201, a buffer unit 202a, and a state determination unit 203a. FIG. 3 is a timing chart for explaining the operations of the respective units of the sensor unit 20 according to the first embodiment. The sensor unit starts the operation shown in this chart upon receiving a notification representing transition to the sleep state from a control unit 100. Note that the sensor unit may steadily operate independently of the state of the control unit 100.

The operations of the units will be described below with reference to FIG. 3.

The acceleration sensor 201 steadily performs an operation of detecting an acceleration generated in the mobile wireless terminal apparatus and storing the detection result in the buffer unit 202a at a preset period t0. Note that when filled with detection results, the buffer unit 202a discards them in chronological order and stores the latest one instead.

The state determination unit 203a reads out the detection results of the acceleration sensor 201 accumulated in the buffer unit 202a every time a period T (> t0) has elapsed. More specifically, the state determination unit 203a reads out, at the period T, the detection results of a plurality of samples accumulated in the buffer unit 202a during the period T.

The state determination unit 203a determines the state of the mobile wireless terminal apparatus based on the readout detection results of the plurality of samples. Upon determining that the mobile wireless terminal apparatus is being held by the user who has, e.g., picked it up, the state determination unit 203a causes the control unit 100 to transit from the sleep state to the active state.

As described above, in the mobile wireless terminal apparatus having the above arrangement, the acceleration sensor 201 performs detection at the period t0, and the buffer unit 202a accumulates the detection results. The state determination unit 203a reads out the detection results from the buffer unit 202a at the period T longer than the period t0 and determines the state of the mobile wireless terminal apparatus.

According to the mobile wireless terminal apparatus with the above arrangement, the state determination unit 203a performs determination at the period T longer than the detection period t0, instead of determining the detection result of the acceleration sensor 201 one by one. This reduces power consumption concerning determination without any degradation of detection accuracy, although the detection delays somewhat.

### (Second Embodiment)

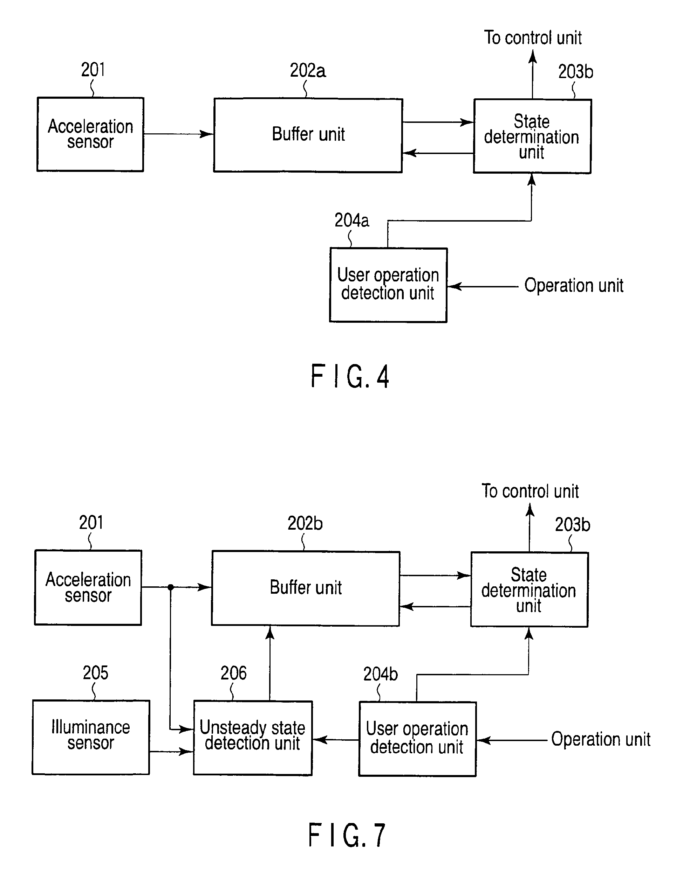

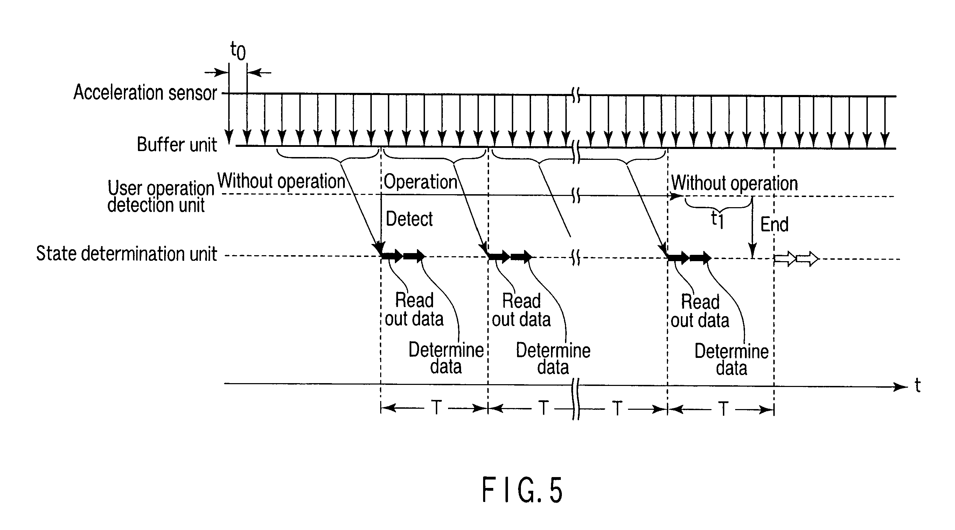

FIG. 4 shows the arrangement of a sensor unit 20 according to the second embodiment of the present invention. The sensor unit 20 includes an acceleration sensor 201, a buffer unit 202a, a state determination unit 203b, and a user operation detection unit 204a. FIG. 5 is a timing chart for explaining the operations of the respective units of the sensor unit 20 according to the second embodiment. The sensor unit starts the operation shown in this chart upon receiving a notification representing transition to the sleep state from a control unit 100. Note that the sensor unit may steadily operate independently of the state of the control unit 100.

The operations of the units will be described below with reference to FIG. 5.

The acceleration sensor 201 steadily performs an operation of detecting an acceleration generated in the mobile wireless terminal apparatus and storing the detection result in the buffer unit 202a at a preset period t0. Note that when filled with detection results, the buffer unit 202a discards them in chronological order and stores the latest one instead.

The user operation detection unit 204a monitors a user operation on an operation unit 50. When detecting a user operation, the user operation detection unit 204a notifies the state determination unit 203b of it. After receiving the notification representing that the user operation detection unit 204a has detected a user operation, the state determination unit 203b starts processing of reading out the detection results of the acceleration sensor 201 accumulated in the buffer unit 202a every time a period T (> t0) has elapsed. More specifically, the state determination unit 203b starts reading out, at the period T, the detection results of a plurality of samples accumulated in the buffer unit 202a during the period T.

Note that the state determination unit 203b may read out, upon receiving the notification from the user operation detection unit 204a, detection results accumulated in the buffer unit 202a at that point of time, and then read out the detection results of the acceleration sensor 201 accumulated in the buffer unit 202a every time the period T has elapsed.

The state determination unit 203b determines the state of the mobile wireless terminal apparatus based on the readout detection results of the plurality of samples. Upon determining that the mobile wireless terminal apparatus is being held by the user who has, e.g., picked it up, the state determination unit 203b causes the control unit 100 to transit from the sleep state to the active state.

After that, upon detecting a state without user operations has continued for a time t1 or more, the user operation detection unit 204a notifies the state determination unit 203b of it. Then, the state determination unit 203b stops the processing of reading out the detection results from the buffer unit 202a. FIG. 5 illustrates the time t1 shorter than the period T. However, the time t1 may be longer than the period T.

As described above, in the mobile wireless terminal apparatus having the above arrangement, the acceleration sensor 201 performs detection at the period t0, and the buffer unit 202a accumulates the detection results. When a user operation is detected, the state determination unit 203b reads out the detection results from the buffer unit 202a at the period T longer than the period t0 and determines the state of the mobile wireless terminal apparatus.

According to the mobile wireless terminal apparatus with the above arrangement, the state determination unit 203b performs determination at the period T longer than the detection period t0 only when a user operation is detected, instead of determining the detection result of the acceleration sensor 201 one by one. This further reduces power consumption concerning determination without any degradation of detection accuracy, although the detection delays somewhat.

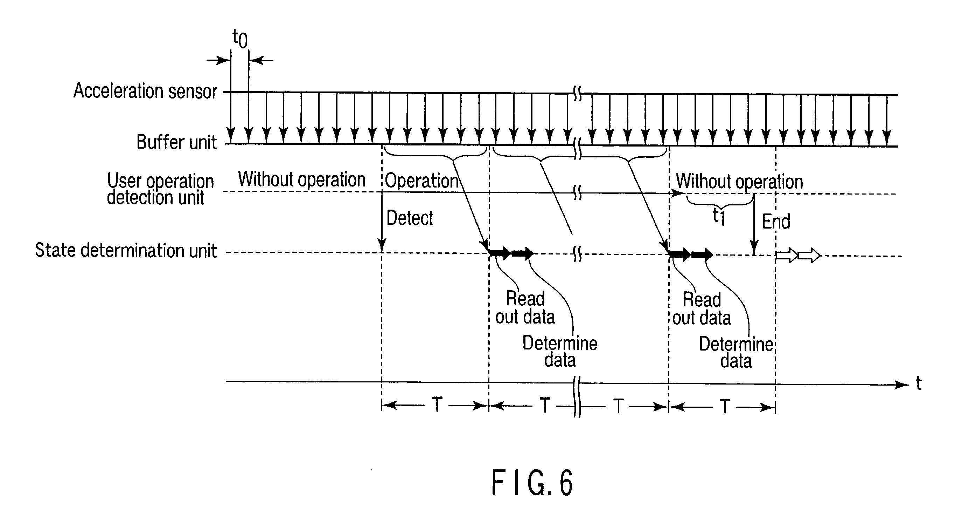

Note that in the second embodiment, the state determination unit reads out the detection results of the acceleration sensor 201 which are accumulated in the buffer unit 202a until detection of a user operation, as shown in FIG. 5. However, the state determination unit may read out the detection results of the acceleration sensor 201 which are accumulated in the buffer unit 202a after detection of a user operation, as shown in FIG. 6.

### (Third Embodiment)

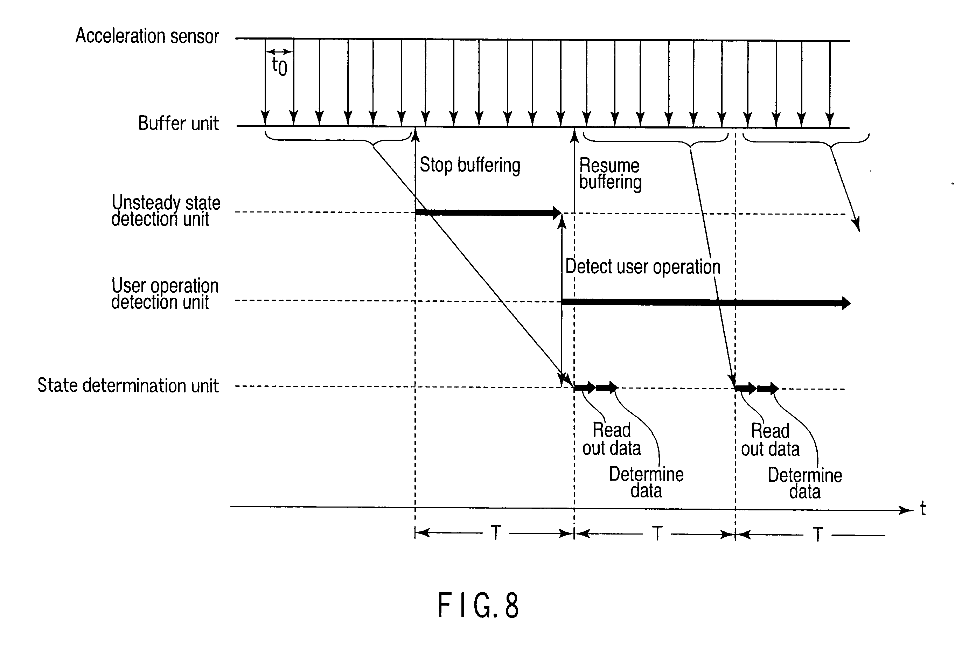

FIG. 7 shows the arrangement of a sensor unit 20 according to the third embodiment of the present invention. The sensor unit 20 includes an acceleration sensor 201, a buffer unit 202b, a state determination unit 203b, a user operation detection unit 204b, an illuminance sensor 205, and an unsteady state detection unit 206. FIG. 8 is a timing chart for explaining the operations of the respective units of the sensor unit 20 according to the third embodiment. The sensor unit starts the operation shown in this chart upon receiving a notification representing transition to the sleep state from a control unit 100. Note that the sensor unit may steadily operate independently of the state of the control unit 100.

The operations of the units will be described below with reference to FIG. 8.

The acceleration sensor 201 steadily performs an operation of detecting an acceleration generated in the mobile wireless terminal apparatus and storing the detection result in the buffer unit 202b at a preset period t0. Note that when filled with detection results, the buffer unit 202b discards them in chronological order and stores the latest one instead.

The illuminance sensor 205 detects the illuminance around the mobile wireless terminal apparatus and outputs the detection result to the unsteady state detection unit 206. The unsteady state detection unit 206 determines based on the detection result of the illuminance sensor 205 whether a preset state has been detected. For example, if a change of the ambient brightness has exceeded a preset level or more(or the ambient brightness has exceeded a preset brightness), the unsteady state detection unit 206 detects the change to an unsteady state. This aims at detecting, as an unsteady state, a user's extraction operation of, e.g., taking out the mobile wireless terminal apparatus from a bag. The user operation detection unit 204b monitors a user operation on an operation unit 50.

When the unsteady state detection unit 206 detects an unsteady state, the buffer unit 202b is controlled not to store the detection result of the acceleration sensor 201 during the detection of the unsteady state. More specifically, the unsteady state detection unit 206 instructs the buffer unit 202b to stop storing the detection result of the acceleration sensor 201. The buffer unit 202b thus stops storing the detection result of the acceleration sensor 201.

When detecting a user operation on the operation unit 50, the user operation detection unit 204b notifies the state determination unit 203b and the unsteady state detection unit 206 that a user operation has been performed. The buffer unit 202b stopped storing the detection result of the acceleration sensor 201 when the unsteady state detection unit 206 detected the unsteady state. Hence, the unsteady state detection unit 206 which has received the notification from the user operation detection unit 204b controls the buffer unit 202b to resume storing the detection result of the acceleration sensor 201. More specifically, the unsteady state detection unit 206 instructs the buffer unit 202b to resume storing the detection result of the acceleration sensor 201, and the buffer unit 202b resumes storing the detection result of the acceleration sensor 201.

On the other hand, upon receiving the notification from the user operation detection unit 204b, the state determination unit 203b starts processing of reading out the detection results of the acceleration sensor 201 accumulated in the buffer unit 202b every time a period T (> t0) has elapsed. More specifically, the state determination unit 203b starts reading out, at the period T, the detection results of a plurality of samples accumulated in the buffer unit 202a during the period T.

Note that when receiving the notification, the state determination unit 203b reads out the latest detection results accumulated in the buffer unit 202b at that point of time. After that, every time the period T has elapsed, the state determination unit 203b reads out the detection results of a plurality of samples accumulated in the buffer unit 202b during the period T. With this processing, the state determination unit 203b reads out the detection results immediately before the unsteady state detection unit 206 detects the unsteady state and subsequent detection results except during the time from the unsteady state detection by the unsteady state detection unit 206 to the user operation detection.

The state determination unit 203b determines the state of the mobile wireless terminal apparatus based on the readout detection results of the plurality of samples. Upon determining that the mobile wireless terminal apparatus is being held by the user who has, e.g., picked it up, the state determination unit 203b causes the control unit 100 to transit from the sleep state to the active state.

As described above, in the mobile wireless terminal apparatus having the above arrangement, the state determination unit 203b reads out the detection results immediately before the change to the unsteady state and those after the user operation detection except during the time from the unsteady state detection by the unsteady state detection unit 206 to the user operation detection and determines the state of the mobile wireless terminal apparatus.

According to the mobile wireless terminal apparatus with the above arrangement, the state determination unit 203b performs determination at the period T longer than the detection period t0 only when a user operation is detected, instead of determining the detection result of the acceleration sensor 201 one by one. This further reduces power consumption concerning determination without any degradation of detection accuracy, although the detection delays somewhat.

Additionally, the detection result of the acceleration sensor 201 in an unsteady state is not suitable for determining a state in which, for example, the user has extracted the mobile wireless terminal apparatus from a bag, and is therefore not used for state determination. This prevent determination errors.

Note that the present invention is not directly limited to the above embodiments, and constituent elements can be modified in the stage of practice without departing from the spirit and scope of the invention. Various inventions can be formed by properly combining a plurality of constituent elements disclosed in the above embodiments. For example, several constituent elements may be omitted from all the constituent elements described in the embodiments. In addition, constituent elements throughout different embodiments may be properly combined.

For example, in the above embodiments, a mobile wireless terminal apparatus has been exemplified as a portable electronics. However, the present invention is not limited to this and is also applicable to a notebook personal computer, a PDA (Personal Digital Assistance), a portable game machine, a portable music player, a car navigation system, and the like.

Various changes and modifications can also be made within the spirit and scope of the present invention.

## Claims

1. A portable electronics **characterized by** comprising:
a detection unit (201) which detects a state of the portable electronics;
a storage unit (202a, 202b) which stores a detection result of the detection unit at a first period; and
a determination unit (203a, 203b) which reads out, every time a second period longer than the first period has elapsed, a plurality of detection results stored in the storage unit during the second period and determines the state of the portable electronics based on the plurality of readout detection results.

2. The portable electronics according to claim 1, **characterized by** further comprising:
an input unit (50) which receives a request from a user; and
a request detection unit (204a, 204b) which detects input of the request to the input unit,
wherein when the request detection unit has detected the input of the request, the determination unit reads out, every time the second period has elapsed, the plurality of detection results stored in the storage unit during the second period and determines the state of the portable electronics based on the plurality of readout detection results.

3. The portable electronics according to claim 2, **characterized in that** the determination unit determines the state of the portable electronics based on detection results which are stored in the storage unit until the request detection unit has detected the input of the request.

4. The portable electronics according to claim 2, **characterized in that** the determination unit determines the state of the portable electronics based on detection results which are stored in the storage unit after the request detection unit has detected the input of the request.

5. The portable electronics according to claim 2, **characterized by** further comprising an ambient state detection unit (205a) which detects a state around the portable electronics,
wherein the storage unit stores, at the first period, a plurality of detection results except detection results detected by the detection unit during detection of a preset state by the ambient state detection unit.

6. The portable electronics according to claim 1, **characterized in that** the detection unit detects an acceleration generated in the portable electronics.

7. The portable electronics according to claim 1, **characterized by** further comprising a switching unit (203a, 203b) which switches an operating state of a control unit controlling the portable electronics from a sleep state to an active state or from the active state to the sleep state in accordance with a determination result of the determination unit.

8. The portable electronics according to claim 1, **characterized by** further comprising a switching unit (203a, 203b) which switches an operating state of the portable electronics from a high power consumption state to a low power consumption state or from the low power consumption state to the high power consumption state in accordance with a determination result of the determination unit.

9. The portable electronics according to claim 1, **characterized by** further comprising a switching unit (203a, 203b) which switches several functions of the portable electronics from an operating state to a stop state or from the stop state to the operating state in accordance with a determination result of the determination unit.

10. A sensing method **characterized by** comprising:
a detection step (201) of detecting a state of the portable electronics;
a storage step (202a, 202b) of causing a storage unit to store a detection result in the detection step at a first period; and
a determination step (203a, 203b) of reading out, every time a second period longer than the first period has elapsed, a plurality of detection results stored in the storage unit during the second period and determining the state of the portable electronics based on the plurality of readout detection results.

11. The sensing method according to claim 10, **characterized by** further comprising a request detection step (204a, 204b) of detecting input of a request to an input unit which receives a request from a user,
wherein in the determination step, when the input of the request has been detected in the request detection step, the plurality of detection results stored in the storage unit during the second period are read out every time the second period has elapsed, and the state of the portable electronics is determined based on the plurality of readout detection results.

12. The sensing method according to claim 11, **characterized in that** in the determination step, the state of the portable electronics is determined based on detection results which are stored in the storage unit until the input of the request has been detected in the request detection step.

13. The sensing method according to claim 11, **characterized in that** in the determination step, the state of the portable electronics is determined based on detection results which are stored in the storage unit after the input of the request has been detected in the request detection step.

14. The sensing method according to claim 11, **characterized by** further comprising an ambient state detection step (205a) of detecting a state around the portable electronics,
wherein in the storage step, the storage unit stores, at the first period, a plurality of detection results except detection results detected in the detection step during detection of a preset state in the ambient state detection step.

15. The sensing method according to claim 10, **characterized in that** in the detection step, an acceleration generated in the portable electronics is detected.

16. The sensing method according to claim 10, **characterized by** further comprising a switching step (203a, 203b) of switching an operating state of a control unit controlling the portable electronics from a sleep state to an active state or from the active state to the sleep state in accordance with a determination result in the determination step.

17. The sensing method according to claim 10, **characterized by** further comprising a switching step (203a, 203b) of switching an operating state of the portable electronics from a high power consumption state to a low power consumption state or from the low power consumption state to the high power consumption state in accordance with a determination result in the determination step.

18. The sensing method according to claim 10, **characterized by** further comprising a switching step (203a, 203b) of switching several functions of the portable electronics from an operating state to a stop state or from the stop state to the operating state in accordance with a determination result in the determination step.
